# EUROPÄISCHE PATENTSCHRIFT

(11) **EP 1 723 469 B1**
(45) Veröffentlichungstag und Bekanntmachung des Hinweises auf die Patenterteilung: **14.05.2008**
(21) Anmeldenummer: 04719991.4
(22) Anmeldetag: 12.03.2004
(51) Int. Cl.: G03B 21/62

(54) **RÜCKPROJEKTIONSSCHIRM FÜR DIE 3D-PROJEKTION, SOWIE VERFAHREN ZU DESSEN HERSTELLUNG**
BACK-PROJECTION SCREEN FOR 3D-PROJECTION AND METHOD FOR PRODUCING THE SAME
ECRAN DE RETROPROJECTION POUR UNE PROJECTION EN 3D ET PROCEDE POUR LE PRODUIRE

(43) Veröffentlichungstag der Anmeldung: 22.11.2006
(73) Patentinhaber: Evonik Röhm GmbH, 64293 Darmstadt (DE)
(72) Erfinder: GROOTHUES, Herbert, 64331 Weiterstadt (DE); SCHMIDT, Jann, 64291 Darmstadt (DE); PARUSEL, Markus, 64409 Messel (DE)
(86) Internationale Anmeldenummer: PCT/EP2004/002628
(87) Internationale Veröffentlichungsnummer: WO 2005/088391

(56) Entgegenhaltungen:
- EP-A- 0 561 551
- EP-A- 1 152 286
- WO-A-20/04042471
- DE-A- 3 421 521
- US-A1- 2002 009 573

## Beschreibung

Die vorliegende Erfindung betrifft einen Rückprojektionsschirm für die 3D-Projektion sowie ein Verfahren zur dessen Herstellung.

Mittels der Rückprojektionstechnik können Informationen einem breiten Publikum zugänglich gemacht werden. Prinzipiell besteht der Aufbau eines solchen Systems aus einer Abbildungsfläche, die von der Rückseite mit einem Projektor beleuchtet wird und so die information bereitstellt.

Diese Technik findet z.B. Einsatz in Schaltwarten (Kraftwerke, Bahn-Verkehr), um den Verantwortlichen den Überblick über die komplexen Vorgänge zu erleichtern, so dass Steuerungsfehler vermieden werden können. Eine weitere Anwendung sind Anzeigetafeln in z.B. Sportstadien und bei Motorsportrennen. Hier wird den Zuschauern der Verlauf und der Stand des Ereignisses übermittelt, auch wenn sich diese in größerer Entfernung vom eigentlichen Geschehen aufhalten.

Es handelte sich hierbei um sehr große Abbildungsflächen. Durch die ständige Weiterentwicklung auf dem technischen Sektor (Projektortechnik) sind im Laufe der Jahre weitere Anwendungsfelder hinzugekommen.

So wird diese Art der Informationsübermittlung auch in z.B. TV-Geräten, Grossraum- und Heim-Kinos, aber auch als Werbeträger auf Messen, in Schaufenstern und Ladengeschäften angewendet.

Des weiteren wird diese Technik auch zur Informationsübermittlung bei Präsentationen und in Flugsimulatoren eingesetzt, wo die virtuelle Umgebung möglichst realitätsnah auf den Cockpit-Scheiben abgebildet wird.

Viele Vorteile dieser Technik werden dadurch erzielt, dass der Projektor ausserhalb des Betrachtungsraumes steht. Ein vor der Projektionsfläche befindlicher Betrachter verdeckt somit die Projektion nicht, störende Geräusche des Projektors werden vermieden und eine ansprechende Raumgestaltung ist dadurch möglich.

Mittlerweile gibt es eine Vielzahl von Kunststoffplatten und Folien, die in der Rückprojektionstechnik eingesetzt werden. Häufig werden Platten dahingehend modifiziert, dass diese definierte Oberflächenstrukturen in Form von Fresnellinsensystemen auf der Rückseite und zusätzlich vertikal angeordnete Lenticularlinsen auf der Betrachterseite aufweisen. Die Herstellung dieser Rückprojektionstafeln ist folglich mit einen hohen Aufwand verbunden. Die Oberflächenstrukturen können zudem sehr empfindlich gegenüber mechanischer Belastung sein. Infolge einer Beschädigung wird das Erscheinungsbild der Projektion sehr stark in Mitleidenschaft gezogen.

Des weiteren sind Rückprojektionsplatten und Folien bekannt, die Streumedien aufweisen, wobei derartige Platten Partikel mit einem zur Matrix unterschiedlichen Brechungsindex enthalten. Die Platten und Folien eigenen sich ebenfalls für die Rückprojektion, vereinen aber nicht die gesamte Bandbreite des Anforderungsprofils, so dass nur ein Teil der Anforderungen an einen Schirm erfüllt werden.

Durch die große Anzahl an unterschiedlichen Einsatzmöglichkeiten, werden dem zufolge an die Projektionsfläche die verschiedensten Anforderungen gestellt. In der einen Anwendung müssen die Projektionsflächen z.B. über eine sehr ruhige, klare und hoch aufgelöste Bildwiedergabe verfügen, weil hier der Betrachter über einen längeren Zeitraum die Informationen aufnehmen muss (Beispiel: Schaltwarten, Heim-Kino, usw.).

Werden diese Projektionsflächen zur Präsentation und Werbung beispielsweise auf Messeständen eingesetzt, dann müssen die Flächen besonders unempfindlich gegen mechanische Belastung und Verschmutzung sein, während die Anforderungen an die Projektionsqualität nicht so hoch sind.

Beispielsweise können mit bekannten Streumedien, wie Bariumsulfat und Titandioxid, Platten und Folien hergestellt werden, die über einen hohen Lichtstreuwinkel verfügen. Die Auflösung der Projektion ist ebenfalls hoch. Demnach sollte der Betrachtungswinkel der Abbildung ebenfalls entsprechend hoch sein. Allerdings zeigt sich, dass selbst in geringen Dicken die Abbildungsschärfe der Projektionsplatten verschwommen und trüb ist und dass die anderen Anforderungen, wie beispielsweise eine gute Oberflächenbeschaffenheit nicht oder nur teilweise erreicht bzw. bereitgestellt werden können.

Des weiteren sind Schirme bekannt, die Kunststoffpartikel als Streumedien enthalten. So beschreibt das Dokument JP11179856 Mehrschichtplatten mit mindestens einer Schicht, die eine Polymethylmethacrylat-Matrix sowie vernetzte Polymethylmethacrylat-Perlen als Streu-/Mattierungsmittel umfasst, wobei der Anteil der Perlen im Bereich von 0,5 bis 25 Gew.-% liegt. Die Perlen weisen eine Größe im Bereich von 3 bis 30 µm auf, wobei in den Beispielen lediglich 2 mm dicke Platten beschreiben werden, die etwa 3 Gew.-% Streuperlen einer Größe von ca. 6µm enthalten. Lichttransmission und Oberflächenglanz sind beschrieben, wobei jedoch die Abbildungseigenschaften der Platte nicht ideal sind.

Die japanische Offenlegungsschrift JP 07234304 beschreibt eine Mischung aus vernetzten Acrylat/Styrol-Perlen (14µm) in einem transparenten Kunststoff. Eine Beschreibung der Oberflächenrauhigkeit wird nicht dargelegt, wobei allerdings die in den Beispielen beschriebenen Platten durch Spritzguss hergestellt werden, so dass ein sehr hoher Druck auf die Platten ausgeübt wird, der im allgemeinen zu einer sehr geringen Oberflächenrauhigkeit führt. Die gemäß den Beispielen hergestellten Platten zeigen kein optimales Abbildungsverhalten.

Die Druckschrift EP-A-0 561 551 beschreibt eine Mehrschichtplatte mit einer Streuschicht aus einer Mischung aus einem transparenten Polymer und sphärischen Partikel (2-15 µm). Die Konzentration der Teilchen liegt im Bereich von 0,1 bis 40 Gew.-%. In den Beispielen wurde eine Mehrschichtplatte mit einer 0,64 mm dicken lichtstreuenden Schicht hergestellt, die 20 Gew.-% Partikel einer Größe von ca. 5 µm umfasst. Auch diese Platte zeigt kein ideales Bild.

Rüchprojektionschirme sind ausserdem aus Druchschriften EP 1152286 A1 und US 2002/000 9573 A1 bekannt.

Problematisch an bekannten, mit Streumedien versehenen Rückprojektionsschirmen ist dementsprechend, dass deren Abbildungseigenschaften nicht optimal sind. Insbesondere weisen die bekannten Schirme eine relativ geringe Bildschärfe oder eine relativ ungünstige Helligkeitsverteilung auf. Darüber hinaus bestehen auch Probleme hinsichtlich der Farbechtheit. Weiterhin genügen viele Schirme nicht den mechanischen Anforderungen, wobei insbesondere Kratzer eine optisch nachteilige Wirkung haben.

### 3D-Projektion

Rückprojektionsschirme für die 3D-Projektion sind z. B. bekannt aus EP-A 0 162 408 und WO 00/34826.

Beim Verfahren der 3D-Projektion werden als Bildquelle jeweils zwei Projektionen überlagert, die im Prinzip denselben Bildinhalt übertragen, der jedoch in einem gewissen Abstand, z. B. im Augenabstand, versetzt aufgenommen wurden. Ein häufig verwendetes Prinzip ist z. B. das Polarisationsverfahren. Mittels Projektoren, die mit polarisiertem Licht arbeiten, wird das Licht beider Aufnahmen mit unterschiedlichen Polarisationsausrichtungen auf den Rückprojektionsschirm abgestrahlt.

Der Betrachter betrachtet das Bild durch eine Brille, die jeweils getrennt für das rechte und das linke Auge mit entsprechenden Polarisationsfiltern ausgestattet ist. Das menschliche Gehirn verarbeitet die beiden unterschiedlichen Bildeindrücke zu einer dreidimensionalen Bildwahrnehm ung.

### Aufgabe und Lösung

In Anbetracht des hierin angegebenen und diskutierten Standes der Technik war es mithin Aufgabe der vorliegenden Erfindung Rück projektionsschirme anzugeben, die eine besonders hohe Bildqualität ermöglichen. Insbesondere sollten die Schirme eine hohe Bildschärfe und Auflösung des projizierten Bildes erlauben und insbesondere für die 3D-Projektion geeignet sein.

Darüber hinaus sollten die Abbildungen auf den Rückprojektionsschirmen besonders farbecht sein.

Eine weitere Aufgabe der Erfindung bestand darin Rückprojektionsschirme zur Verfügung zu stellen, die eine besonders gleichmässige Helligkeitsverteilung aufweisen.

Darüber hinaus sollten die Rückprojektionsschirme eine möglichst hohe mechanische Stabilität aufweisen. Hierbei sollten Kratzer auf dem Schirm nicht oder nur geringfügig sichtbar sein. Insbesondere sollten Beschädigungen keinen oder nur einen geringen Einfluss auf das Abbildungsvermögen des Schirms haben.

Des weiteren lag der Erfindung die Aufgabe zugrunde Rückprojektionsschirme zur Verfügung zu stellen, die besonders einfach hergestellt werden können. So sollten die Rückprojektionsschirme insbesondere durch Extrusion erzeugt werden können.

Darüber hinaus war es mithin Aufgabe der vorliegenden Erfindung, Rückprojektionsschirme zu schaffen, die eine hohe Bildruhe aufweisen. Hierdurch können Darstellungen über einen langen Zeitraum ermüdungsfrei betrachtet werden.

Ein weiteres Ziel der vorliegenden Erfindung bestand darin, Rückprojektionsschirme bereitzustellen, die auf einfache Weise in Größe und Form den Anforderungen angepasst werden können.

Darüber hinaus sollten die Abbildungen auf den Rückprojektionsschirmen besonders kontrastreich sein.

Eine weitere Aufgabe der Erfindung bestand darin, dass die Rückprojektionsschirme eine hohe Haltbarkeit, insbesondere eine hohe Beständigkeit gegen UV-Bestrahlung oder Bewitterung aufweisen.

Des weiteren lag der vorliegenden Erfindung die Aufgabe zugrunde Rückprojektionsschirme zur Verfügung zu stellen, die, bezogen auf ihre Abbildungseigenschaften, nur in einem geringen Maß spiegeln.

Darüber hinaus sollten die Rückprojektionsschirme geschaffen werden, die eine geringe Kratzempfindlichkeit aufweisen.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Rückprojektionsschirme. Zweckmässige Abwandlungen der erfindungsgemäßen Rückprojektionsschirme werden in den auf Anspruch 1 rückbezogenen Unteransprüchen unter Schutz gestellt.

Hinsichtlich der Verfahren zur Herstellung von Rückprojektionsschirmen liefert der Anspruch 18 und 19 eine Lösung der zugrunde liegenden Aufgaben.

Dadurch, dass die Konzentration der sphärische Kunststoffpartikel C_{P}, die Dicke der lichtstreuenden Polymethylmethacrylat-Schicht d_{S} sowie die Teilchengröße der sphärische Kunststoffpartikel D_{P} so gewählt wird, dass das Verhältnis c_{P}*d_{S} /D_{P}³ im Bereich von 0,0015 bis 0,015 Gew.-%*mm/µm³ und das Verhältnis von mittlerer Oberflächenrauhigkeit der Polymethylmethacrylat-Schicht Rₐ zu Teilchengröße der sphärische Kunststoffpartikel D_{P} im Bereich von 0,05 bis 0,4 liegt, wobei der Rückprojektionsschirm mindestens eine lichtstreuende Polymethylmethacrylat-Schicht einer Dicke im Bereich von 0,05 bis 4 mm umfasst, die sphärische Kunststoffpartikel mit einer Teilchengröße im Bereich von 5 bis 35 µm in einer Konzentration im Bereich von 2 bis 60 Gew.-%, bezogen auf das Gesamtgewicht der lichtstreuenden Polymethylmethacrylat-Schicht, aufweist, wobei die sphärische Kunststoffpartikel einen Brechungsindexunterschied zur Polymethylmethacrylat-Matrix im Bereich von 0,02 bis 0,2 aufweisen, gelingt es Rückprojektionsschirme zur Verfügung zu stellen, die eine besonders hohe Bildqualität ermöglichen.

Durch die erfindungsgemäßen Maßnahmen werden u.a. insbesondere folgende Vorteile erzielt:
□ Die Rückprojektionsschirme der vorliegenden Erfindung erlauben eine hohe Bildschärfe und Auflösung des projizierten Bildes.
□ Die Abbildung auf den erfindungsgemäßen Rückprojektionsschirmen sind besonders farbecht und kontrastreich.
□ Die gemäß der vorliegenden Erfindung zur Verfügung gestellten Rückprojektionsschirme weisen eine besonders gleichmässige Helligkeitsverteilung auf.
□ Darüber hinaus zeigen die Rückprojektionsschirme der vorliegenden Erfindung eine hohe mechanische Stabilität. Hierbei sind Kratzer auf der Schirm nicht oder nur geringfügig sichtbar.
□ Des weiteren weisen auf die erfindungsgemäßen Rückprojektionsschirme projizierte Bilder eine hohe Bildruhe auf. Hierdurch können Darstellungen über einen langen Zeitraum ermüdungsfrei betrachtet werden.
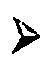 Darüber hinaus zeigen die Rückprojektionsschirme der vorliegenden Erfindung ein nicht glänzendes, mattes Oberflächenprofil. Die Ausprägung der Oberflächenstruktur lässt sich gegebenenfalls unterschiedlich einstellen ohne die optischen Parameter, vom Glanz abgesehen, zu beeinflussen. Hierdurch können Spiegelungen, die die Abbildung auf dem Schirm nachteilig beeinflussen reduziert werden.
□ Des weiteren können die Rückprojektionsschirme der vorliegenden Erfindung besonders einfach hergestellt werden. So können die Rückprojektionsschirme insbesondere durch Extrusion erzeugt werden.
□ Die erfindungsgemäßen Rückprojektionsplatten zeigen eine hohe Beständigkeit gegen Verwitterung, insbesondere gegen UV-Bestrahlung.
   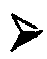 Die Größe und Form der Rückprojektionsschirme kann an die Bedürfnisse angepasst werden.
   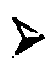 Die geringe Doppelbrechung und daraus resultierend der geringe Gangunterschied des Materials erlaubt die Verwendung der Rückprojektionsschirme für die 3D-Projektion, da polarisiertes Licht praktisch nicht mehr depolarisiert wird.

Für die Zwecke der 3D-Projektion werden die erfindungsgemäßen Rückprojektionsschirme in Form einer Platte oder Folie umfassend mindestens eine lichtstreuende Schicht aus extrudiertem Polymethylmethacrylat-Kunststoff mit einem Gangunterschied aufgrund der optischen Doppelbrechung von höchstens 25 nm, bevorzugt höchstens 15, besonders bevorzugt höchstens 5 nm eingesetzt. Die Platte oder Folie kann z. B eine Stärke bzw. Dicke im Bereich von 0,1 bis 10 mm aufweisen. Der Rückprojektionsschirm kann auch eine coextrudierte Folie oder Platte sein, die zusätzlich zur streuperlenhaltigen Schicht eine Trägerschicht aus Polymethylmethacrylat-Kunststoff aufweist, der keine lichtstreuenden Kunststoffpartikel umfasst. Die coextrudierte Folie oder Platte, umfassend die lichtstreuende Schicht und die Trägerschicht, soll dann insgesamt einen Gangunterschied aufgrund der optischen Doppelbrechung von höchstens 25 nm, bevorzugt höchstens 15, besonders bevorzugt höchstens 5 nm aufweisen. Die Trägerschicht kann z. B eine Stärke bzw. Dicke im Bereich von 0,5 bis 20 mm aufweisen, während die lichtstreuende Schicht z. B eine Stärke bzw. Dicke im Bereich von 0,1 bis 1 mm aufweisen kann.

Hierbei ist zu beachten, daß das Extrusionsverfahren immer eine gewisse Ausrichtung der Molekülketten in Extrusionsrichtung bewirkt. Diese Ausrichtung führt zu Doppelbrechungseigenschaften, die das polarisierte Licht der beiden Projektionen teilweise depolarisiert, was natürlich unerwünscht ist.

Der extrudierte Polymethylmethacrylat-Kunststoff für Rückprojektionsschirme, die für die 3D-Projektion vorgesehen sind, wird daher nach der Extrusion einer thermischen Nachbehandlung unterzogen. Bei der thermischen Nachbehandlung kommt es zu einer Rückschrumpfung, die die Ausrichtung der Polymermoleküle wieder weitgehend aufhebt. Das Resultat ist, daß die ursprünglich im Material vorhandene Doppelbrechungseigenschaft stark vermindert wird.

Die thermische Nachbehandlung von extrudiertem Polymethylmethacrylat-Kunststoff in Form von Folien oder Platten, die für Rückprojektionsschirme für die 3D-Projektion vorgesehen sind, kann z. B. im Bereich von 110 bis 190, bevorzugt 120 bis 160 °C für 5 Minuten bis 24 Stunden, bevorzugt 10 Minuten bis 2 Stunden, je nach Materialzusammensetzung und Materialstärke erfolgen. Ein Fachmann kann dies leicht optimieren. Der thermisch bewirkte Rückschrumpfungsvorgang kann mit liegendem oder bevorzugt an hängendem Material vorgenommen werden.

Geeignete Meßmethoden zur Messung des Gangunterschiedes aufgrund der optischen Doppelbrechung sind dem Fachmann bekannt. Der Gangunterschied kann z. B. gemessen werden mit Hilfe eines Polarisationsmikroskops in Kombination mit einem Ehringhaus-Kippkompensator.

Die lichtstreuende Polymethylmethacrylat-Schicht des Rückprojektionsschirms gemäß der vorliegenden Erfindung weist 2 bis 60 Gew.-%, insbesondere 3 bis 55 Gew.-% und vorzugsweise 6 bis 48 Gew.-%, bezogen auf das Gewicht der lichtstreuenden Polymethylmethacrylat-Schicht, sphärische Kunststoffpartikel auf.

Der Begriff sphärisch bezeichnet im Rahmen der vorliegenden Erfindung, dass die Kunststoffpartikel vorzugsweise eine kugelförmige Gestalt aufweisen, wobei dem Fachmann offensichtlich ist, dass aufgrund der Herstellungsmethoden auch Kunststoffpartikel mit anderer Gestalt enthalten sein können, oder dass die Form der Kunststoffpartikel von der idealen Kugelgestalt abweichen kann.

Dementsprechend bedeutet der Begriff sphärisch, dass das Verhältnis von der grössten Ausdehnung der Kunststoffpartikel zur geringsten Ausdehnung maximal 4, vorzugsweise maximal 2 beträgt, wobei diese Ausdehnungen jeweils durch den Schwerpunkt der Kunststoffpartikel gemessen werden. Vorzugsweise sind mindestens 70%, besonders bevorzugt mindestens 90%, bezogen auf die Zahl der Kunststoffpartikel, sphärisch.

Die Kunststoffpartikel haben einen mittleren Durchmesser (Gewichtsmittel) im Bereich von 5 bis 35 µm, vorzugsweise im Bereich von 8 bis 25 µm. Günstigerweise liegen 75% der Kunststoffpartikel im Bereich von 5 bis 35 µm.

Die Ermittlung der Teilchengröße sowie der Teilchengrößenverteilung kann mittels Laserextinktionsverfahren erfolgen. Hierzu kann ein Galai-CIS-1 der Firma L.O.T. GmbH verwendet werden, wobei die Messmethode zur Bestimmung der Teilchengröße im Benutzerhandbuch enthalten ist.

Die erfindungsgemäß verwendbaren Kunststoffpartikel sind nicht besonders beschränkt. So ist die Art des Kunststoffs aus dem die Kunststoffpartikel hergestellt werden weitgehend unkritisch, wobei an der Phasengrenze der Kunststoffperlen zum Matrixkunststoff eine Brechung des Lichts stattfindet.

Dementsprechend weist der Brechungsindex der Kunststoffpartikel eine bei der Na-D-Linie (589 nm) und bei 20°C gemessene Brechzahl nₒ auf, die um 0,02 bis 0,2 Einheiten von der Brechzahl nₒ des Matrixkunststoffs unterscheidet.

Vorzugsweise umfassen die sphärische Kunststoffpartikel vernetzes Polystyrol und/oder vernetzte Poly(meth)acrylate.

Bevorzugte Kunststoffpartikel sind aufgebaut aus:
b1) 25 bis 99,9 Gew.-Teilen von Monomeren, die aromatische Gruppen als Substituenten aufweisen, wie beispielsweise Styrol, α-Methylstyrol, ringsubstituierte Styrole, Phenyl(meth)acrylat, Benzyl(meth)acrylat, 2-Phenylethyl(meth)acrylat, 3-Phenylpropyl(meth)-acrylat Oder Vinylbenzoat; sowie
b2) 0 bis 60 Gew.-Teilen eines Acryl- und/oder Methacrylsäureesters mit bis 12 C-Atomen im aliphatischen Esterrest, die mit den Monomeren b1) copolymerisierbar sind, wobei beispielhaft genannt seien: Methyl(meth)acrylat, Ethyl(meth)acrylat, n-Propyl(meth)acrylat, i-Propyl(meth)acrylat, n-Butyl(meth)acrylat, i-Butyl(meth)acrylat, tert.Butyl(meth)acrylat, Cyclohexyl(meth)acrylat, 3,3,5-Trimethylcyclohexyl(meth)acrylat, 2-Ethylhexyl(meth)acrylat, Norbornyl(meth)acrylat oder lsobornyl(meth)acrylat;
b3) 0,1 bis 15 Gew.-Teilen vernetzenden Comonomeren, die mindestens zwei ethylenisch ungesättigte, radikalisch mit b1) und gegebenenfalls mit b2) copolymerisierenbare Gruppen aufweisen, wie beispielsweise Divinylbenzol, Glykoldi(meth)acrylat, 1,4-Butandioldi(meth)acrylat, Allyl(meth)acrylat, Triallylcyanurat, Diallylphthalat, Diallylsuccinat, Pentaerythrittetra(meth)acrylat oder Trimethylolpropantri(meth)acrylat, wobei sich die Comonomeren b1), b2) und b3) zu 100 Gew.-Teilen ergänzen.

Besonders bevorzugt weisen Mischungen aus denen die Kunststoffpartikel hergestellt werden mindestens 80 Gew.-% Styrol und mindestens 0,5 Gew.-% Divinylbenzol auf.

Die Herstellung von vernetzten Kunststoffpartikeln ist in der Fachwelt bekannt. So können die Streupartikel durch Emulsionspolymerisation hergestellt werden, wie beispielsweise in EP-A 342 283 oder EP-A 269 324 beschrieben, ganz besonders bevorzugt durch Polymerisation in organischer Phase, wie beispielsweise in der deutschen Patentanmeldung P 43 27 464.1 beschrieben, wobei bei der letztgenannten Polymerisationstechnik besonders enge Teilchengrößenverteilungen oder anders ausgedrückt besonders geringe Abweichungen der Teilchendurchmesser vom mittleren Teilchendurchmesser auftreten.

Besonders bevorzugt werden Kunststoffpartikel eingesetzt, die eine Temperaturbeständigkeit von mindestens 200°C, insbesondere von mindestens 250°C aufweisen, ohne dass hierdurch eine Beschränkung erfolgen soll. Hierbei bedeutet der Begriff Temperaturbeständig, dass die Teilchen im wesentlichen keinem wärmebedingten Abbau unterliegen. Ein wärmebedingter Abbau führt in unerwünschter Weise zu Verfärbungen, so dass das Kunststoffmaterial unbrauchbar wird.

Besonders bevorzugte Partikel sind unter anderem von Sekisui unter dem Handelsnamen ®RTechpolymer SBX-6, ®Techpolymer SBX-8 und ®Techpolymer SBX-12 erhältlich.

Gemäß einer weiteren bevorzugten Ausführungsform der vorliegenden Erfindung weisen die sphärische Partikel eine Größe im Bereich von 15 µm bis 35 µm auf. Besonders bevorzugt weisen bei dieser Ausführungsform mindestens 60% der sphärische Partikel einen Durchmesser von mindestens 15 µm und höchstens 30% der Streuperlen einen Durchmesser von mehr als 25 µm auf. Gemäß einem besonderen Aspekt weisen höchstens 80% dieser sphärischen Partikel eine. Größe im Bereich von 15 µm bis 25µm auf.

Gemäß einem besonderen Aspekt der vorliegenden Erfindung liegen diese Teilchen gleichmäßig verteilt in der Kunststoffmatrix vor, ohne dass eine nennenswerte Aggregation oder Zusammenlagerung der Partikel auftritt. Gleichmäßig verteilt bedeutet, dass die Konzentration an Partikeln innerhalb der Kunststoffmatrix im wesentlichen konstant ist.

Die lichtstreuende Schicht umfasst neben den sphärischen Partikeln eine Kunststoffmatrix, die Polymethylmethacrylat (PMMA) aufweist. Vorzugsweise umfasst die lichtstreuende Polymethylmethacrylat-Schicht mindestens 30 Gew.-%, bezogen auf das Gewicht der lichtstreuenden Schicht, Polymethylmethacrylat.

Polymethylmethacrylat-Kunststoffe werden im allgemeinen durch radikalische Polymerisation von Mischungen erhalten, die Methylmethacrylat enthalten. Im allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere.

Daneben können diese Mischungen zur Herstellung von Polymethylmethacrylaten weitere (Meth)acrylate enthalten, die mit Methylmethacrylat copolymerisierbar sind. Der Ausdruck (Meth)acrylate umfasst Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylät, tert.-Butyl(meth)acrylat, Pentyl(meth)acrylat und 2-Ethylhexyl(meth)acrylat; (Meth)acrylate, die sich von ungesättigten Alkoholen ableiten, wie z. B.
Oleyl(meth)acrylat, 2-Propinyl(meth)acrylat, Allyl(meth)acrylat,
Vinyl(meth)acrylat;
Aryl(meth)acrylate, wie Benzyl(meth)acrylat oder
Phenyl(meth)acrylat, wobei die Arylreste jeweils unsubstituiert oder bis zu vierfach substituiert sein können;
Cycloalkyl(meth)acrylate, wie 3-Vinylcyclohexyl(meth)acrylat,
Bornyl(meth)acrylat;
Hydroxylalkyl(meth)acrylate, wie
3-Hydroxypropyl(meth)acrylat,
3,4-Dihydroxybutyl(meth)acrylat,
2-Hydroxyethyl(meth)acrylat, 2-Hydroxypropyl(meth)acrylat;
Glycoldi(meth)acrylate, wie 1,4-Butandiol(meth)acrylat,
(Meth)acrylate von Etheralkoholen, wie
Tetrahydrofurfuryl(meth)acrylat, Vinyloxyethoxyethyl(meth)acrylat;
Amide und Nitrile der (Meth)acrylsäure, wie
N-(3-Dimethylaminopropyl)(meth)acrylamid,
N-(Diethylphosphono)(meth)acrylamid,
1-Methacryloylamido-2-methyl-2-propanol;
schwefelhaltige Methacrylate, wie
Ethylsulfinylethyl(meth)acrylat,
4-Thiocyanatobutyl(meth)acrylat,
Ethylsulfonylethyl(meth)acrylat, ,
Thiocyanatomethyl(meth)acrylat,
Methylsulfinylmethyl(meth)acrylat,
Bis((meth)acryloyloxyethyl)sulfid;
mehrwertige (Meth)acrylate, wie
Trimethyloylpropantri(meth)acrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;

Acrylnitril; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid,
Methylmaleinsäureanhydrid, Maleinimid, Methylmaleinimid; und
Diene, wie beispielsweise Divinylbenzol.

Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 10 Gew.-%, vorzugsweise von 0,5 bis 3 Gew.-%, bezogen auf das Gewicht der Monomeren, eingesetzt.

Hierbei können verschiedene Poly(meth)acrylate eingesetzt werden, die sich beispielsweise im Molekulargewicht oder in der Monomerzusammensetzung unterscheiden.

Des weiteren kann die Matrix der lichtstreuenden Schicht weitere Polymere enthalten, um die Eigenschaften zu modifizieren. Hierzu gehören unter anderem Polyacrylnitrile, Polystyrole, Polyether, Polyester, Polycarbonate und Polyvinylchloride. Diese Polymere können einzeln oder als Mischung eingesetzt werden, wobei auch Copolymere, die von den zuvor genannten Polymere ableitbar sind.

Das Gewichtsmittel des Molekulargewichts M_{w} der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 500 000 g/mol, vorzugsweise 50 000 bis 300 000 g/mol und besonders bevorzugt 80 000 bis 200 000 g/mol, ohne dass hierdurch eine Einschränkung erfolgen soll.

Gemäß einer besonderen Ausführungsform der vorliegenden Erfindung weist die Matrix der lichtstreuenden Polymethylmethacrylat-Schicht mindestens 70, vorzugsweise mindestens 80 und besonders bevorzugt mindestens 90 Gew.-%, bezogen auf das Gewicht der Matrix der lichtstreuenden Schicht, Polymethylmethacrylat auf.

Die Poly(meth)acrylate der Matrix der lichtstreuenden Schicht weisen gemäß einem besonderen Aspekt der vorliegenden Erfindung einen Brechungsindex gemessen bei der Na-D-Linie (589 nm) und bei 20°C im Bereich von 1,46 bis 1,54 auf.

Die Formmassen zur Herstellung der lichtstreuenden Schicht können übliche Zusatzstoffe aller Art enthalten. Hierzu gehören unter anderem Antistatika, Antioxidantien, Entformungsmittel, Flammschutzmittel, Schmiermittel, Farbstoffe, Fliessverbesserungsmittel, Füllstoffe, Lichtstabilisatoren, UV-Absorber und organische Phosphorverbindungen, wie Phosphite oder Phosphonate, Pigmente, Verwitterungsschutzmittel und Weichmacher. Die Menge an Zusatzstoffen ist jedoch auf den Anwendungszweck.beschränkt. So sollte die lichtstreuende Eigenschaft der Polymethylmethacrylat-Schicht sowie deren Transparenz nicht zu stark durch Additive beeinträchtigt werden.

Gemäß einem besonderen Aspekt der vorliegenden Erfindung kann die Formmasse gegebenenfalls durch einen Schlagzähmodifier mechanisch stabiler ausgerüstet werden. Der artige Schlagzähmodifizierungsmittel für Polymethacrylat-Kunststoffe sind hinlänglich bekannt, so sind die Herstellung und der Aufbau von schlagzähmodifizierten Polymethacrylat-Formmassen unter anderem in EP-A 0 113 924, EP-A 0 522 351, EP-A 0 465 049 und EP-A 0 683 028 beschrieben.

Bevorzugte schlagzähe Formmassen, die zur Herstellung der Matrix dienen können, weisen 70 - 99 Gew.-% Polymethylmethacrylate auf. Diese Polymethylmethacrylate wurden zuvor beschrieben.

Gemäß einem besonderen Aspekt der vorliegenden Erfindung werden die zur Herstellung von schlagzähmodifizierten Formmassen verwendeten Polymethylmethacrylate durch radikalische Polymerisation von Mischungen erhalten, die 80 bis 100 Gew.-%, vorzugsweise 90 - 98 Gew.-%, Methylmethacrylat und gegebenenfalls 0-20 Gew.-%, bevorzugt 2-10 Gew.-% weitere radikalisch polymerisierbaren Comonomere umfassen, die ebenfalls zuvor aufgeführt wurden. Besonders bevorzugte Comonomere sind unter anderem C₁- bis C₄-Alkyl(meth)acrylate, insbesondere Methylacrylat, Ethylacrylat oder Butylmethacrylat.

Vorzugsweise liegt das mittlere Molekulargewicht M_{w} der Polymethylmethacrylate, die zur Herstellung der schlagzähmodifizierten Matrix dienen können, im Bereich von 90.000 g/mol bis 200.000 g/mol, insbesondere 100.000 g/mol bis 150.000 g/mol.

Bevorzugte schlagzähe Formmassen, die zur Herstellung der Matrix dienen können, enthalten 1 bis 30, bevorzugt 2 bis 20, besonders bevorzugt 3 bis 15, insbesondere 5 bis 12 Gew.-% eines Schlagzähmodifizierungsmittels, welches eine Elastomerphase aus vernetzten Polymerisatteilchen darstellt.

Bevorzugte schlagzähe Formmassen, die zur Herstellung der Matrix dienen können, enthalten 0,5 bis 55, bevorzugt 1 bis 45, besonders bevorzugt 2 bis 40, insbesondere 3 bis 35 Gew.-% eines Schlagzähmodifizierungsmittels, welches eine Elastomerphase aus vernetzten Polymerisatteilchen darstellt.

Das Schlagzähmodifizierungsmittel kann in an sich bekannter Weise durch Perlpolymerisation oder durch Emulsionspolymerisation erhalten werden.

Bevorzugte Schlagzähmodifizierungsmittel stellen vernetzte Teilchen mit einer mittleren Teilchengröße im Bereich von 50 bis 1000 nm, bevorzugt 60 bis 500 nm und besonders bevorzugt 80 bis 120 nm dar.

Derartige Partikel können beispielsweise durch die radikalische Polymerisation von Mischungen erhalten werden, die in der Regel mindestens 40 Gew.-%, bevorzugt 50 bis 70 Gew.-% Methylmethacrylat, 20 bis 80 Gew.-%, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat, wie z. B. Allylmethacrylat und Comonomeren, die mit den zuvor genannten Vinylverbindungen copolymerisiert werden können.

Zu den bevorzugten Comonomeren gehören unter anderem C₁-C₄-Alkyl(meth)acrylaten, wie Ethylacrylat oder Butylmethacrylat, bevorzugt Methylacrylat, oder anderen vinylisch polymerisierbaren Monomeren wie z. B. Styrol. Die Mischungen zur Herstellung der zuvor genannten Partikel können vorzugsweise 0 bis 10, bevorzugt 0,5 bis 5 Gew.-% Comonomere umfassen.

Besonders bevorzugte Schlagzähmodifizierungsmittel sind Polymerisatteilchen, die einen zwei-, besonders bevorzugt einen dreischichtigen Kern-Schale-Aufbau aufweisen. Derartige Kern-Schale-Polymerisate sind unter anderem in EP-A 0 113 924, EP-A 0 522 351, EP-A O 465 049 und EP-A 0 683 028 beschrieben.

Besonders bevorzugte Schlagzäh-Modifier auf Basis von Acrylatkautschuk haben unter anderem folgenden Aufbau:
- Kern:: Polymerisat mit einem Methylmethacrylatanteil von mindestens 90 Gew.-%, bezogen auf das Gewicht des Kerns.
- Schale 1:: Polymerisat mit einem Butylacrylatanteil von mindestens 80 Gew.-%, bezogen auf das Gewicht der ersten Schale.
- Schale 2:: Polymerisat mit einem Methylmethacrylatanteil von mindestens 90 Gew.%, bezogen auf das Gewicht der zweiten Schale.

Der Kern sowie die Schalen können neben den genannten Monomeren jeweils weitere Monomere enthalten. Diese wurden zuvor dargelegt, wobei besonders bevorzugte Comonomere vernetzend wirken.

Beispielsweise kann ein bevorzugter Acrylatkautschuk-Modifier folgenden Aufbau aufweisen:
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacrylat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)

Das Verhältnis von Kern zu Schale(n) der Acrylatkautschuk-Modifiet kann in weiten Bereichen schwanken. Vorzugsweise liegt das Gewichtsverhältnis Kern zu Schale K/S im Bereich von 20:80 bis 80:20, bevorzugt von 30:70 zu 70:30 bis Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Kern-Schale-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Derartige Schlagzähmodifier sind von der Fa. Mitsubishi unter dem Handelsnamen METABLEN® IR 441 kommerziell erhältlich. Darüber hinaus können auch schlagzäh-modifizierte Formmassen erhalten werden.

Besonders bevorzugte Formmassen zur Herstellung der Kunststoff-Matrix sind von der Fa. Röhm GmbH & Co. KG Kommerziell erhältlich.

Die Dicke der lichtstreuenden Polymethylmethacrylat-Schicht liegt im allgemeinen im Bereich von 0,05 bis 4 mm.

Erfindungsgemäß wird die Konzentration der sphärische Partikel Cₚ, die Dicke der lichtstreuenden Polymethylmethacrylat-Schicht dₛ sowie die Teilchengröße der sphärische Partikel D_{P} so gewählt wird, dass das Verhältnis aus dem Produkt von Konzentration der sphärische Partikel C_{P} und Dicke der lichtstreuenden Polymethylmethacrylat-Schicht zur dritten Potenz der Teilchengröße der sphärische Partikel c_{P}*d_{S} /D_{P}³ im Bereich von 0,0015 bis 0,015 Gew.-%*mm/µm³, vorzugsweise 0,0025 bis 0,009 Gew.-%*mm/µm³ liegt

Das Verhältnis von mittlerer Oberflächenrauhigkeit der Polymethylmethacrylat-Schicht Rₐ zur Teilchengröße der sphärische Partikel D_{P} liegt im Bereich von 0,05 bis 0,4, insbesondere 0,05 bis 0,3 und vorzugsweise 0,06 bis 0,2.

Gemäß einer besonderen Ausführungsform des Schirms der vorliegenden Erfindung ist das Verhältnis Konzentration der sphärischen Partikel C_{P} zur Dicke der lichtstreuenden Polymethylmethacrylat-Schicht d_{S} cC_{P}/d_{S} größer oder gleich 2,5 Gew.-%/mm, insbesondere größer oder gleich 4 Gew.-%/mm.

Die lichtstreuende Polymethylmethacrylat-Schicht weist vorzugsweise einen Glanz R_{85°} kleiner oder gleich 60, insbesondere kleiner oder gleich 50 auf.

Das Verhältnis aus Dicke der lichtstreuenden Polymethylmethacrylat-Schicht d_{S} und Teilchengröße der sphärische Partikel D_{P} d_{S}/D_{P} liegt vorzugsweise im Bereich von 5 bis 1500, insbesondere 5 bis 500, bevorzugt 5 bis 250, besonders bevorzugt 5 bis 150 und 10 bis 300, ohne dass hierdurch eine Beschränkung erfolgen soll.

Gemäß einer besonderen Ausführungsform der vorliegenden Erfindung liegt die mittlere Oberflächenrauhigkeit Ra der Platte vorzugsweise im Bereich von 0,4 µm bis 6 µm, insbesondere 0,4 bis 2 µm, bevorzugt 0,5 bis 1,5 µm, insbesondere 0,8 µm bis 5 µm, besonders bevorzugt 1 µm bis 3,5 µm.

Innerhalb dieses Bereiches sind Kratzer auf der Oberfläche der lichtstreuenden Schicht nur in einem besonders geringen Mass sichtbar. Diese Kratzunempfindlichkeit kann gemäß DIN 53799 und DIN EN 438 durch eine visuelle Beurteilung einer geschädigten Oberfläche bestimmt werden, wobei die Schädigung durch einen Diamanten, der mit unterschiedlicher Kraft auf die Oberfläche einwirkt, hervorgerufen wird.

Die Oberflächenrauhigkeit Ra der Platte kann durch Variation von verschiedenen Parametern beeinflusst werden, die von der Art der Herstellung abhängig sind. Hierzu gehören unter anderem die Temperatur der Schmelze während der Extrusion, wobei eine höhere Temperatur der Schmelze zu einer raueren Oberfläche führt. Hierbei ist jedoch zu beachten, dass die Temperatur der Schmelze von der genauen Zusammensetzung der Formmasse abhängig ist. Im allgemeinen liegt die Temperatur der Schmelze im Bereich von 150 bis 300°C, vorzugsweise im Bereich von 200 bis 290°C. Diese Temperaturen beziehen sich auf die Temperaturen der Schmelze beim Düsenaustritt.

Des weiteren kann die Oberflächenrauhigkeit über den Spalt zwischen den zur Glättung der Platten eingesetzten Walzen beeinflusst werden. Umfasst ein Glättwerk beispielsweise 3 Walzen in L-Anordnung, wobei die Formmasse von der Düse auf den Spalt zwischen Walze 1 und Walze 2 geführt wird und die Walze 2 um 60-180° umschlingt, so wird durch den Spalt zwischen Walze 2 und Walze 3 eine Glättung der Oberflächen erzielt. Wird der Spalt zwischen Walze 2 und Walze 3 auf Plattendicke eingestellt, so werden die Streupartikel auf der Plattenoberfläche in die Matrix eingedrückt, wodurch sich die Oberfläche glatter darstellt. Im allgemeinen wird dieser Spalt zur Erzielung einer raueren Oberfläche etwas größer eingestellt als die Plattendicke der herzustellenden Platte, wobei dieser Wert im Bereich von 0,1 bis 2 mm über Plattendicke, vorzugsweise 0,1 bis 1,5 mm über Plattendicke liegt, ohne dass hierdurch eine Beschränkung erfolgen soll. Des weiteren wird die Oberflächenrauhigkeit durch die Partikelgröße sowie die Plattendicke beeinflusst, wobei die Ausführungsbeispiele die Abhängigkeiten darlegen.

Die lichtstreuende Schicht kann über bekannte Verfahren hergestellt werden, wobei thermoplastische Formgebungsverfahren bevorzugt sind. Nach Zugabe der Partikel können aus den zuvor beschriebenen Formmassen lichtstreuenden Schichten durch herkömmliche thermoplastische Formgebungsverfahren hergestellt werden.

Gemäß einer besonderen Ausführungsform wird zur Extrusion oder zur Herstellung von Streuperlen enthaltenden Formmassen-Granulaten ein Doppelschneckenextruder verwendet. Hierbei werden die Kunststoffpartikel vorzugsweise in die Schmelze im Extruder überführt. Durch diese Maßnahme können Schmelzen erhalten werden, aus denen Schirme bereitgestellt werden können, die eine besonders hohe Transmission aufweisen.

Hierbei können die Rückprojektionsschirme über einen Zweistufenprozeß hergestellt werden, bei welchem man einer erfindungsgemäßen Sidefeeder-Compoundierung auf einem Doppelschneckenextruder und Zwischengranulierung die Extrusion der Folie oder Platte auf einem Einschneckenextruder nachschaltet. Das über den Doppelschneckenextruder erhaltene Granulat kann besonders hohe Anteile an Streuperlen erhalten, so dass durch Abmischung mit Formmassen ohne Streuperlen auf einfache Weise Projektionsschirme mit unterschiedlichem Streuperlengehalt hergestellt werden können.

Des weiteren kann auch ein Einstufenprozess durchgeführt werden, bei welchem die Eincompoundierung der sphärischen Kunststoffpartikel in die Schmelze wie beschrieben auf einem Doppelschneckenextruder erfolgt, welchem ggf. ein druckerhöhendes Aggregat (z.B. Schmelzepumpe) nachgeschaltet ist, an welches sich die Extrusionsdüse unmittelbar anschließt, mit welcher ein flächiges Produkt ausgeformt wird. Überraschend können durch die zuvor beschriebenen Maßnahmen Rückprojektionsschirme mit einem besonders geringen Gelbindex erhalten werden:

Des weiteren können die Schirme auch durch Spritzguss hergestellt werden, wobei jedoch die Verfahrensparameter bzw. die Gussform so zu wählen sind, dass eine Oberflächenrauhigkeit im erfindungsgemäßen Bereich erzielt wird.

Die Compoundierung der Matrix mit den Streupartikel erfolgt vorzugsweise durch einen Doppelschneckenextruder, bei der eigentlichen Plattenextrusion kann ebenfalls ein Einschneckenextruder zum Einsatz kommen, ohne dass hierdurch eine Beschränkung erfolgen soll.

Je nach Verwendungsart kann die lichtstreuende Polymethylmethacrylat-Schicht als Schirm eingesetzt werden. Hierbei können die dünneren Schichten als aufrollbare Folie Verwendung finden. Besonders bevorzugte Folien werden durch die zuvor dargelegten Methoden schlagzäh ausgerüstet.

Des weiteren kann eine dünne lichtstreuende Polymethylmethacrylat-Schicht auf eine Kunststoffplatte aufgebracht werden, um deren mechanische Stabilität zu erhöhen. Diese Kunststoffplatte weist im allgemeinen keine sphärischen Partikel auf. Vorzugsweise weist diese Kunststoffplatte Polyacrylpolymere auf.

Gemäß einem besonderen Aspekt der vorliegenden Erfindung weist der Schirm eine Transmission größer oder gleich 25%, insbesondere größer oder gleich 40% und besonders bevorzugt größer oder gleich 55% auf.

Gemäß einem besonderen Aspekt der vorliegenden Erfindung kann die Formmasse eingefärbt werden. Durch diese Maßnahme kann überraschend der Kontrast verbessert werden. Zur Einfärbung eignen sich insbesondere an sich bekannte Farbstoffe und/oder Russ. Besonders bevorzugte Farbstoffe sind kommerziell erhältlich. Hierzu gehören unter anderem ®Sandoplast Rot G und ®Sandoplast Gelb 2G jeweils von Clariant sowie ®Macroplex Grün 5B und ®Macroplex Violett 3R jeweils von Bayer. Die Konzentration dieser Farbstoffe ist abhängig von dem gewünschten Farbeindruck sowie der Dicke der Platte. Ohne dass hierdurch eine Beschränkung erfolgen soll, liegen diese Konzentration pro Farbstoff im allgemeinen im Bereich von 0 bis 0,8 Gew.-%, vorzugsweise 0,000001 bis 0,4 Gew.-%, bezogen auf das Gesamtgewicht der eingefärbten Formmasse ohne Streuperlen. Die Summe der Farbstoffkonzentrationen liegt vorzugsweise im Bereich von 0 bis 1 Gew.-%, vorzugsweise 0,0001 bis 0,6 Gew.%, bezogen auf das Gesamtgewicht der eingefärbten Formmasse ohne Streuperlen. Der Verlust an Transmission kann zumindest teilweise durch stärkere Projektoren ausgeglichen werden.

Vorzugsweise zeigt der Schirm einen Gelbwert kleiner oder gleich 12, insbesondere kleiner oder gleich 10, ohne dass hierdurch eine Beschränkung erfolgen soll.

Eine besondere Ausführungsform des Schirms der vorliegenden Erfindung weist einen Intensitätshalbwertswinkel größer oder gleich 15°, insbesondere größer oder gleich 25° auf.

Gemäß einem besonderen Aspekt der vorliegenden Erfindung zeigt der Schirm ein Streuvermögen größer oder gleich 0,15, insbesondere größer oder gleich 0,35, ohne dass hierdurch eine Beschränkung erfolgen soll.

Gemäß einer bevorzugten Ausführungsform zeigen die Oberfläche der erfindungsgemäßen Polymethylmethacrylat-Platten in Reflexion ein mattes Erscheinungsbild. Durch die Glanzmessung mit einem Reflektometer nach DIN 67530 kann die Charakterisierung vorgenommen werden. Vorzugsweise liegt der Glanz der Platten bei einem Winkel von 85° unterhalb von 50, besonderst bevorzugt unterhalb von 40 und ganz besonderst bevorzugt unterhalb von 30.

Die Größe und Form des Rückprojektionsschirms der vorliegenden Erfindung ist nicht begrenzt. Im allgemeinen weist der Schirm jedoch eine rechteckige, tafelförmige Gestalt auf, da Bilder üblich in diesem Format dargestellt werden.

Bevorzugt weist ein derartiger Rückprojektionsschirm eine Länge im Bereich von 25 mm bis 10000 mm, vorzugsweise von 50 bis 3000 mm und besonders bevorzugt von 200 bis 2000 mm auf. Die Breite dieser besonderen Ausführungsform liegt im allgemeinen im Bereich von 25 bis 10000 mm, vorzugsweise von 50 bis 3000 mm und besonders bevorzugt von 200 bis 2000 mm. Um eine besonders große Projektionsfläche bereitzustellen, können mehrere dieser Schirm zusammengefasst werden.

Gemäß einer besonderen Ausführungsform weist der Schirm eine besonders hohe Wetterfestigkeit gemäß DIN EN ISO 4892, Teil 2 -Künstliches bewittern oder bestrahlen in Geräten, gefilterte Xenonbogenbestrahlung- auf.

Nachfolgend wird die Erfindung durch Beispiele und Vergleichsbeispiele eingehender erläutert, ohne daß die Erfindung auf diese Beispiele beschränkt werden soll.

### A) Messmethoden

Die mittlere Rauhigkeit Rₐ wurde gemäß DIN 4768 mit einem Messgerät Talysurf 50 der Fa. Taylor Hobson bestimmt.

Die Transmission τ_{D65/2°} wurde gemäß DIN 5036 mit einem Messgerät Lambda 19 der Fa. Perkin Eimer bestimmt.

Der Gelbwert τ_{D65/10°} wurde gemäß DIN 6167 mit einem Messgerät Lambda 19 der Fa. Perkin Eimer bestimmt.

Der Glanz R85° wurde bei 85° gemäß DIN 67530 mit einem Messgerät Dr. Lange Labor-Reflektometer der Fa. Dr. Lange bestimmt.

Das Streuvermögen und des Intensitätshalbwertswinkels wurde gemäß DIN 5036 mit einem Messgerät LMT-Goniometer-Messplatz G O-T-1500 der Fa. LMT bestimmt.

Die verschiedenen Rückprojektionsschirme wurden zusätzlich visuell nach den in Tabelle 1 dargelegten Kriterien beurteilt.

Hierzu wurde ein Projektor der Marke Epson EMP-713 verwendet. In einem Abstand zur Abbildung von ca. 1-1,5m wurde das Testbild bei mehrere Winkel (0° = senkrecht zur Projektionsnormalen, 30° und 60°) be urteilt. Der Abstand des Projektors zur Projektionsplatte betrug ca. 85 cm bei einer Abbildungsdiagonalen von ca. 50 cm.

Technische Daten Epson Projektor EMP 713:
Projektionssystem: Dichroitisches Spiegel und Linsensystem, Bildelemente: 2359296 Pixel (1024x768)*3, Helligkeit: 1200 ANSI Lumen, Kontrast: 400:1, Bildausleuchtung: 85%, Farbwiedergabe: 24 bit bei 16,7 Mio Farben, H: 15-92 kHz, V: 50-85 Hz, Lampe: 150 Watt-UHE, Video-Auflösung: 750 TV-Zeilen

**Tabelle 1**

| Kriterium | Eigenschaft |
|---|---|
| Hot Spot | Unter einem Hot Spot wird eine auf den Lichtkegel der Projektionsbeleuchtung zurückzuführende Lichtverteilung verstanden. Demzufolge ist ein Hot Spot ein Lichtkegel, der in seinem Zentrum wesentlich heller ist als zum Rand der Abbildung. Bei einem stark ausgeprägtem Hot Spot ist die Projektorlampe visuell erkennbar. |
| Helligkeitsverteilung | Die Helligkeitsverteilung wird ebenfalls über die Lichtverteilung der Abbildungsfläche beurteilt und kennzeichnet demnach, inwieweit die Abbildung vom Zentrum zum Rand aus geleuchtet wird. |
| Bildschärfe | Unter der Bildschärfe ist zu verstehen, inwieweit das Testbild klar erkannt werden kann. |
| Auflösung | Die Auflösung der Abbildung gibt wieder, inwieweit feine Strukturen auf der beurteilten Platte verzerrt werden. |
| Bildruhe | Unter Bildruhe ist zu verstehen, inwieweit der Betrachter in der Lage ist die Projektion über längeren Zeitraum aufzunehmen, ohne das seine Augen zu stark beansprucht werden. |

In den Tabellen wurden sehr gute Eigenschaften mit ++, gute Eigenschaften mit +, befriedigende Eigenschaften mit 0, mangelhafte Eigenschaften mit -, sehr mangelhafte Eigenschaften mit - und ungenügende Eigenschaften mit --- markiert.

### B) Herstellung von Kunststoffpartikeln

Zur Herstellung von sphärischen Kunststoffpartikeln wurde ein Aluminiumhydroxid-Pickering-Stabilisator verwendet, der durch Fällung aus Aluminiumsulfat und Sodalösung unmittelbar vor Beginn der eigentlichen Polymerisation hergestellt wurde. Hierzu wurden zunächst 16 g Al₂(SO₄)₃, 0,032 g Komplexbildner (Trilon A) und 0,16 g Emulgator (Emulgator K 30 erhältlich von der Fa. Bayer AG; Natriumsalz eines C₁₅-Paraffinsulfonats) in 0,81 destilliertem Wasser gelöst. Anschließend wurde bei einer Temperatur von ca. 40°C eine 1 N Natriumcarbonat-Lösung zu dem in Wasser gelöstem Aluminiumsulfat unter Rühren zugegeben, wobei der pH-Wert anschließend im Bereich von 5 bis 5,5 lag. Durch diese Vorgehensweise wurde eine kolloidale Verteilung des Stabilisators im Wasser erzielt.

Nach der Fällung des Stabilisators wurde die wäßrige Phase in ein Becherglas überführt. Hierzu wurden 110g Methylmethacrylat, 80g Benzylmethacrylat und 10g Allylmethacrylat sowie 4g Dilaurylperoxyd und 0,4g tert.-Butylper-2-ethylhexanoat gegeben. Diese Mischung wurde mittels eines Dispergators (Ultra-Turrax S50N-G45MF, Fa. Janke und Kunkel, Staufen) 15 Minuten bei 7000 U/min dispergiert.

Im Anschluss an die Scherung wurde das Reaktionsgemisch in den Reaktor, welcher auf die entsprechende Reaktionstemperatur von 80 °C vorgeheizt wurde, eingefüllt und bei ca. 80°C (Polymerisationstemperatur) 45 Minuten (Polymerisationsdauer) unter Rühren (600 U/min) polymerisiert. Es folgte eine Nachreaktionsphase von 1 Stunde bei ca. 85°C Innentemperatur. Nach Abkühlen auf 45°C wurde der Stabilisator durch Zusatz von 50%iger Schwefelsäure in wasserlösliches Aluminiumsulfat überführt. Zur Aufarbeitung der Perlen wurde die erhaltene Suspension über ein handelsübliches Filtertuch filtriert und im Wärmeschrank 24 Stunden bei 50°C getrocknet.

Die Größenverteilung wurde durch Laserextinktionsverfahren untersucht. Die Teilchen wiesen eine mittlere Größe V₅₀ von 19,66 µm auf. Die Perlen hatten eine sphärische Form, wobei keine Fasern festgestellt werden konnten. Koagulation trat nicht auf. Im folgenden werden die so erhaltenen Partikel mit Kunststoffpartikel A bezeichnet

### C) Beispiele 1 bis 6 und Vergleichsbeispiele 1 bis 3

Es wurden verschiedene Rückprojektionsschirme durch Extrusion hergestellt. Hierzu wurden zu Beginn verschiedene Streuperlencompounds aus Kunststoffpartikeln A sowie eine von der Fa. Röhm GmbH & Co. KG erhältliche PMMA-Formmasse (Copolymer aus 97 Gew.-% Methylmethacrylat und 3 Gew.-% Methylacrylat) auf einem Doppelschneckenextruder ZSK 30 der Fa. Werner & Pfleiderer nach der Sidefeederthechnologie = Direkteinspeisung in die Schmelze nach der Dekompressionszone = Entgasungszone, hergestellt. Das gewonnene Granualat bildet die Basis zur weiteren Herstellung der Kunststoffplatten wie sie in den Beispielen aufgeführt sind. In der weiteren Verarbeitung wurde aus dem Konzentrat verschiedene Abmischungen auf unterschiedlichen Gehalt der beschriebenen Streupartikel extrusionstechnisch verarbeitet. Zum Einsatz kam ein Extruder 060 mm der Fa. BREYER. Die Temperatur der Schmelze beim Düsenaustritt betrug im allgemeinen 270°C, wobei jedoch die Düsenaustrittstemperatur des Vergleichsbeispiels 2 260°C betrug. Das Glättwerk wurde im allgemeinen, insbesondere bei den Beispielen so eingestellt, dass eine möglichst raue Oberfläche erzielt wurde.

Der Anteil an Kunststoffpartikeln in der Polymethylmethacrylat-Matrix sowie die Dicke der Platten sind in Tabelle 2 dargestellt. Die gemäß den zuvor genannten Methoden erhaltenen Messergebnisse sind in den Tabellen 3, 4, 5 und 6 wiedergegeben.

### D) Beispiele 7 bis 14 und Vergleichsbeispiele 4 bis 6

Das zuvor in den Beispielen 1 bis 6 beschriebene Herstellungsverfahren wurde im wesentlichen wiederholt, wobei jedoch ®Techpolymer SBX-8 der Fa. Sekisui sowie eine von der Fa. Röhm GmbH & Co. KG erhältliche PMMA-Formmasse (Copolymer aus 97 Gew.-% Methylmethacrylat und 3 Gew.-% Methylacrylat) zu Kunststoffplatten extrudiert wurden.

Der Anteil an Kunststoffpartikeln in der Polymethylmethacrylat-Matrix sowie die Dicke der Platten sind in Tabelle 2 dargestellt. Die gemäß den zuvor genannten Methoden erhaltenen Messergebnisse sind in den Tabellen 3, 4, 5 und 6 wiedergegeben.

**Tabelle 2**

| | Größe der Kunststoffpartikel [µm] | Dicke der Platte [mm] | Gehalt in [Gew.-%] |
|---|---|---|---|
| Vergl.-Bsp. 1 | 20 | 3 | 6 |
| Beispiel 1 | 20 | 3 | 12 |
| Beispiel 2 | 20 | 3 | 24 |
| Vergl.-Bsp. 2 | 20 | 1 | 12 |
| Beispiel 3 | 20 | 1 | 24 |
| Beispiel 4 | 20 | 0,5 | 24 |
| Beispiel 5 | 20 | 0,5 | 48 |
| Vergl.-Bsp. 3 | 20 | 0,25 | 24 |
| Beispiel 6 | 20 | 0,25 | 48 |
| Vergl.-Bsp. 4 | 8 | 3 | 1 |
| Vergl.-Bsp. 5 | 8 | 3 | 3 |
| Vergl.-Bsp. 6 | 8 | 1 | 1 |
| Beispiel 7 | 8 | 1 | 3 |
| Beispiel 8 | 8 | 1 | 6 |
| Beispiel 9 | 8 | 0,5 | 3 |
| Beispiel 10 | 8 | 0,5 | 6 |
| Beispiel 11. | 8 | 0,5 | 12 |
| Beispiel 12 | 8 | 0,25 | 6 |
| Beispiel 13 | 8 | 0,25 | 12 |
| Beispiel 14 | 8 | 0,25 | 24 |

**Tabelle 3**

| | C_{P}*d_{S} /D_{P}³ [Gew.-%*mm/µm³] | Rₐ [µm] | Rₐ/D_{P} |
|---|---|---|---|
| Vergl.-Bsp. 1 | 0,00225 | 0,9 | 0,045 |
| Beispiel 1 | 0,0045 | 1,5 | 0,075 |
| Beispiel 2 | 0,009 | 2,5 | 0,125 |
| Vergl.-Bsp. 2 | 0,0015 | 0,8 | 0,04 |
| Beispiel 3 | 0,003 | 2,5 | 0,125 |
| Beispiel 4 | 0,0015 | 3,2 | 0,16 |
| Beispiel 5 | 0,003 | 4,9 | 0,245 |
| Vergl.-Bsp. 3 | 0,00075 | 4,8 | 0,24 |
| Beispiel 6 | 0,0015 | 6,6 | 0,33 |
| Vergl.-Bsp. 4 | 0,00586 | 0,24 | 0,03 |
| Vergl.-Bsp. 5 | 0,01758 | 0,29 | 0,03625 |
| Vergl.-Bsp. 6 | 0,00195 | 0,18 | 0,0225 |
| Beispiel 7 | 0,00586 | 0,4 | 0,05 |
| Beispiel 8 | 0,01172 | 0,62 | 0,0775 |
| Beispiel 9 | 0,00293 | 0,48 | 0,06 |
| Beispiel 10 | 0,00586 | 0,66 | 0,0825 |
| Beispiel 11 | 0,01172 | 0,81 | 0,10125 |
| Beispiel 12 | 0,00293 | 0,8 | 0,1 |
| Beispiel 13 | 0,00586 | 1,07 | 0,13375 |
| Beispiel 14 | 0,01172 | 1,48 | 0,185 |

**Tabelle 4**

| | Transmission [%] | Gelbwert G(τ_{D65/10°}) | Streuvermögen σ |
|---|---|---|---|
| Vergl.-Bsp. 1 | 90,75 | 3,16 | 0,25 |
| Beispiel 1 | 75,22 | 9,16 | 0,48 |
| Beispiel 2 | 60,62 | 10,74 | 0,65 |
| Vergl-Bsp; 2 | 93,78 | 0,81 | 0,16 |
| Beispiel 3 | 86,73 | 3,81 | 0,35 |
| Beispiel 4 | 88,81 | 1,64 | 0,26 |
| Beispiel 5 | 78,42 | 3,18 | 0,41 |
| Vergl.-Bsp. 3 | 88,33 | 0,32 | 0,19 |
| Beispiel 6 | 78,04 | 0,99 | 0,20 |
| Vergl.-Bsp. 4 | 60,71 | 6,75 | 0,63 |
| Vergl.-Bsp. 5 | 47,72 | 5,35 | 0,88 |
| Vergl.-Bsp. 6 | 88,65 | 2,35 | 0,11 |
| Beispiel 7 | 69,05 | 5,82 | 0,62 |
| Beispiel 8 | 58,06 | 6,55 | 0,84 |
| Beispiel 9 | 82,04 | 3,73 | 0,35 |
| Beispiel 10 | 71,62 | 5,35 | 0,61 |
| Beispiel 11 | 61,82 | 6,05 | 0,81 |
| Beispiel 12 | 83,64 | 3,43 | 0, 31 |
| Beispiel 13 | 73,52 | 5,17 | 0,56 |
| Beispiel 14 | 61,33 | 6,04 | 0,82 |

**Tabelle 5**

| | Glanzmessung R85° | Hotspot | Helligkeitsverteilung |
|---|---|---|---|
| Vergl.-Bsp. 1 | 35,0 | - | - |
| Beispiel 1 | 8,6 | + | + |
| Beispiel 2 | 2,3 | ++ | ++ |
| Vergl.-Bsp. 2 | 10,1 | - | - |
| Beispiel 3 | 1,6 | 0 | 0 |
| Beispiel 4 | 1,3 | 0 | 0 |
| Beispiel 5 | 0,5 | ++ | + |
| Vergl.-Bsp. 3 | 0,9 | --- | --- |
| Beispiel 6 | 0,3 | 0 | 0 |
| Vergl.-Bsp. 4 | 84,7 | ++ | ++ |
| Vergl.-Bsp. 5 | 77,2 | ++ | ++ |
| Vergl.-Bsp. 6 | 86,9 | -- | --- |
| Beispiel 7 | 47,2 | ++ | + |
| Beispiel 8 | 29,4 | ++ | ++ |
| Beispiel 9 | 55,1 | + | + |
| Beispiel 10 | 36,9 | ++ | ++ |
| Beispiel 11 | 26,4 | ++ | ++ |
| Beispiel 12 | 17,6 | 0 | 0 |
| Beispiel 13 | 7,3 | ++ | + |
| Beispiel 14 | 2,1 | ++ | + |

**Tabelle 6**

| | Bildschärfe | Auflösung | Bildruhe |
|---|---|---|---|
| Vergl.-Bsp. 1 | + | Fein | + |
| Beispiel 1 | + | Fein | + |
| Beispiel 2 | 0 | Fein | + |
| Vergl.-Bsp. 2 | + | Fein | - |
| Beispiel 3 | + | Fein | 0 |
| Beispiel 4 | + | Fein | 0 |
| Beispiel 5 | + | Fein | + |
| Vergl.-Bsp. 3 | 0 | Fein | - |
| Beispiel 6 | 0 | Fein | - |
| Vergl.-Bsp. 4 | - | Fein | + |
| Vergl.-Bsp. 5 | -- | Fein | - |
| Vergl.-Bsp. 6 | ++ | Sehr fein | - |
| Beispiel 7 | + | Sehr fein | + |
| Beispiel 8 | 0 | Fein | + |
| Beispiel 9 | ++ | Sehr fein | + |
| Beispiel 10 | ++ | Sehr fein | + |
| Beispiel 11 | 0 | Fein | + |
| Beispiel 12 | ++ | Sehr fein | + |
| Beispiel 13 | ++ | Sehr fein | + |
| Beispiel 14 | 0 | Fein | + |

### Beispiele zur Messung der optischen Kratzempfindlichkeit

Anhand der in den Beispielen 1, 4, 5, 6 und 11 hergestellten Rückprojektionsschirme wurde die visuelle Kratzempfindlichkeit der Extrudate untersucht.

Die Prüfung der Kratzempfindlichkeit erfolgte durch die Eindringtiefe eines Diamanten t_{R} = f (Belastung) mit dem Ritzprüfgerät Modell 203 von Taber Industries, in Anlehnung an DIN 53799 und DIN EN 438: Diamantstichel mit Kegelwinkel 90°, Spitzenradius 90 µm, Drehrichtung entgegen Uhrzeigersinn. Die eingesetzten Belastungen sind in Tabelle 7 dargelegt.

Die visuelle Beurteilung wurde auf einer schwarzen Unterlage durchgeführt (Reflexionsprüfung). Die Untersuchungen (Rauhigkeit, Glanz) an den Versuchsextrudaten erfolgte auf der Oberseite.

Die erhaltenen Ergebnisse sind in Tabelle 7 aufgeführt.

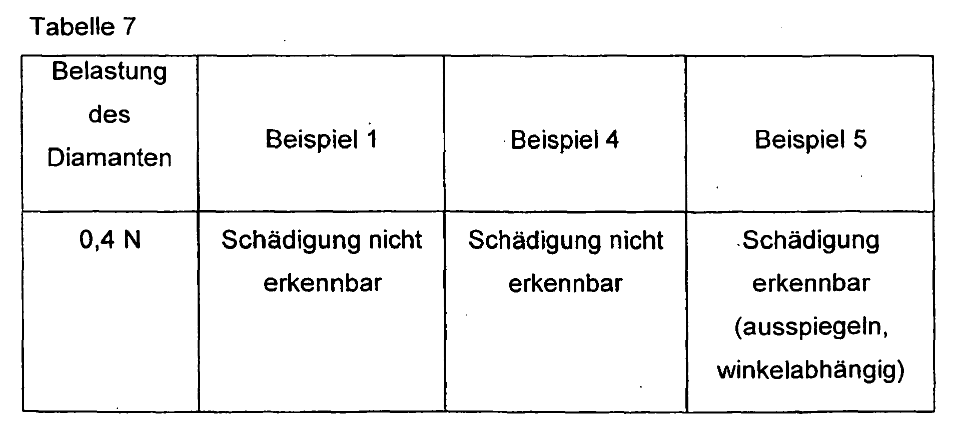

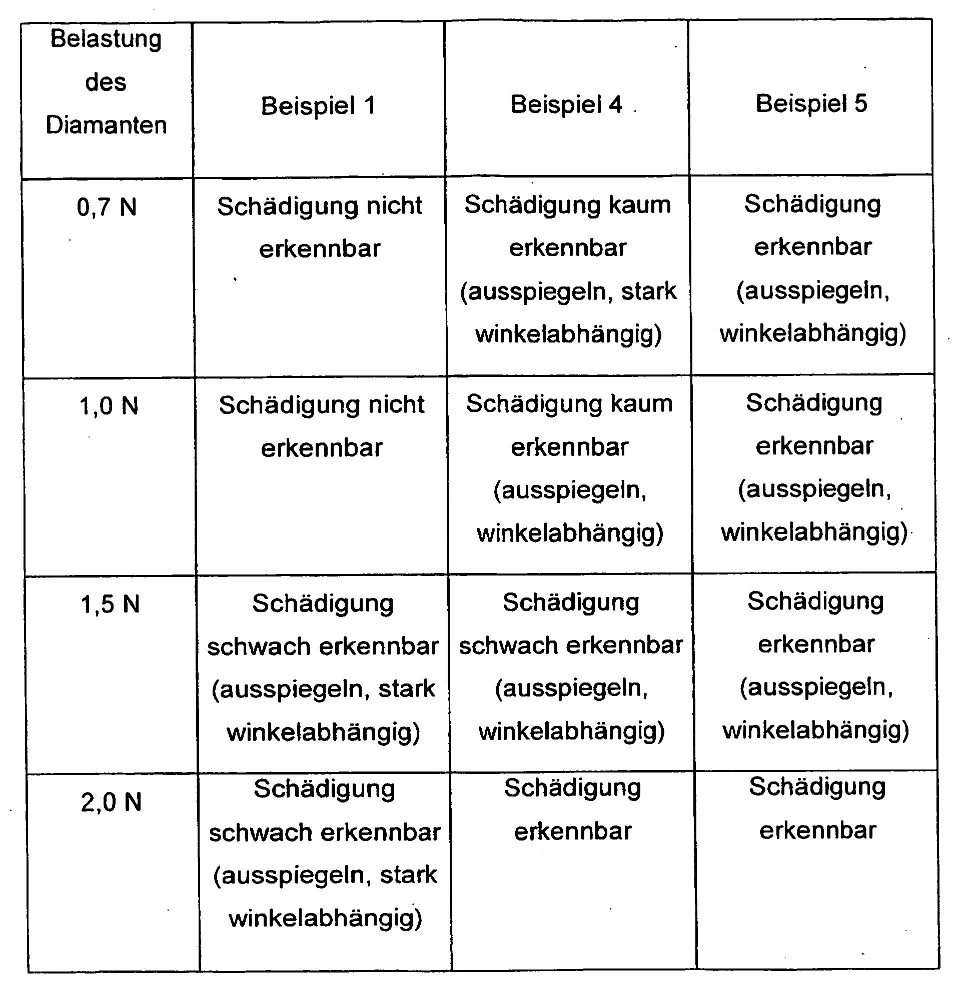

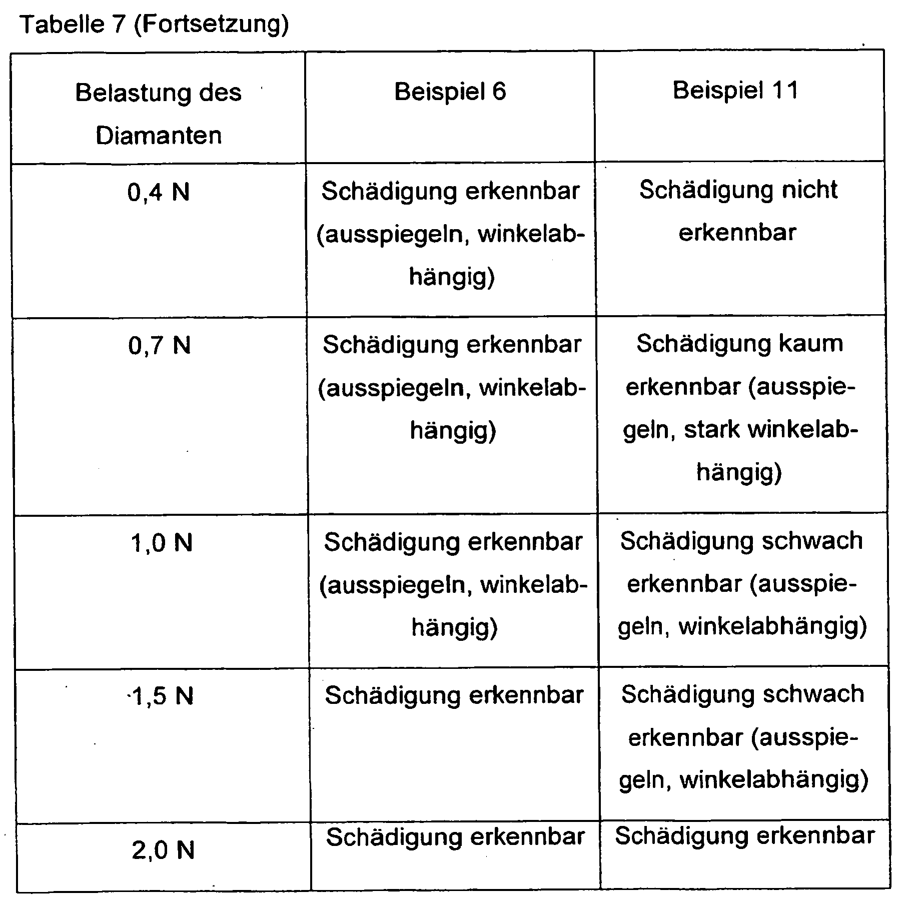

Die Beispiele und Vergleichsbeispiele zeigen deutlich, dass nur eine Kombination aus einem bestimmten, engen Bereich der relativen Oberflächenrauhigkeit Rₐ/D_{P} und dem Verhältnis c_{P}*d_{S} /D_{P}³ zu Rückprojektionsschirmen führt, die eine optimale Bildqualität zur Verfügung stellen.

Die Ausführung, dass die Partikel direkt der Schmelze zugeführt werden, kann mit Erfolg zur Herstellung von Granulaten oder Formkörpern angewandt werden, die eine zweite Komponente, beispielsweise Kunststoffpartikel umfassen (Sidefeeder-Verfahren). Dementsprechend ist diese Technologie nicht auf diese Erfindung beschränkt.

Das Sidefeeder-Verfahren zeichnet sich dadurch aus, dass die zu compoundierenden Formmassen nicht gleichzeitig über die Einzugszone eindosiert werden, sondern dass nur die Basiskomponente über die Einzugszone läuft, während die 2. Komponente nach dem Aufschmelzen der Basisformmasse in die Schmelze zudosiert wird. Anschließend erfolgt die Homogenisierung der Schmelzen über Misch- und Scherteile, die in ihrer Anordnung - und damit Wirkungsweise - an die Empfindlichkeit des Mischgutes angepasst werden können.

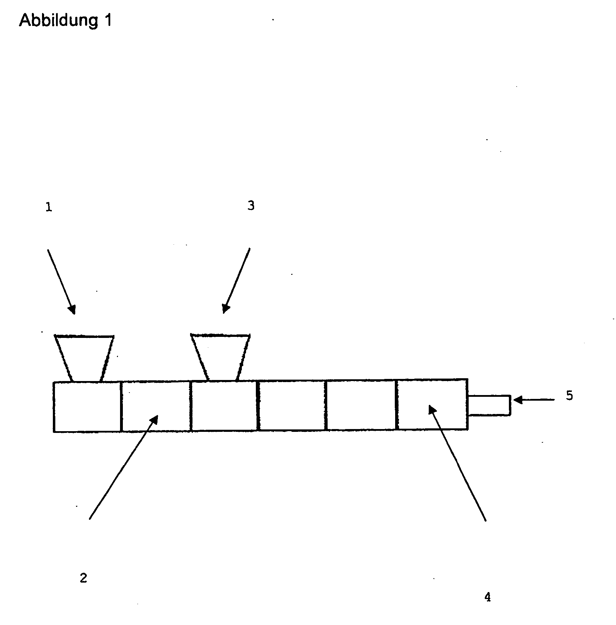

Die Homogenisierte Schmelze wird anschließend durch Stranggranulierung oder Heißabschlag unter Wasser zu Gleichkorngranulat verarbeitet (siehe Abbildung 1).

Die Compoundierung über einen Doppelschneckenextruder (Sidefeedertechnologie) ist in Abbildung 1 schematisch dargestellt. In Abbildung 1 stellen die Bezugszeichen dar:
1. Zugabe der Formmasse über die Einzugszone
2. Aufgeschmolzene Formmasse (bspw. Eine von der Fa. Röhm GmbH & Co. KG erhältliches PMMA)
3. Zugabe der Streumittel (bspw. Techpolymer SBX8) in die heiße Kunststoffschmelze
4. Homogene Schmelze von Streuperlen in Formmasse
5. Extrudat, bspw . 48%iger Masterbatch von Streuperlen in einer Formmasse (Gleichkorngranulat)

In einer zweiten Stufe dient die DF-Formmasse als Ausgangsmaterial zur Herstellung der verschiedensten Produkte, wobei die 2. Komponente nur einen geringen Abbau aufweisen. Hierdurch können wesentliche Vorteile erzielt werden. Bei Perlen gehören hierzu eine geringe Verfärbung der Produkte, beispielsweise lichtstreuende oder lichtleitende Platten (Gelbindex) und eine hohe Transmission.

Gemäß einer besonderen Ausführungsform wird zur Compoundierung ein Doppelschneckenextruder verwendet.

Des weiteren kann das Sidefeeder-Verfahren auch zur Compoundierung mit speziell zur Verarbeitung von Pulvern ausgelegten Einschneckenextrudern und der Sidefeedertechnologie, ähnlich gute Ergebnisse liefern.

## Patentansprüche

1. Rückprojektionsschirm in Form einer Platte oder Folie, umfassend mindestens eine lichtstreuende Schicht aus extrudiertem Poiymethylmethacrylat-Kunststöff mit einem Gangunterschied aufgrund der optischen Doppelbrechung von höchstens 25 nm, einer Dicke im Bereich von 0,05 bis 4 mm, aufweisend sphärische Partikel mit einer Teilchengröße im Bereich von 5 bis 35 µm In einer Konzentration im Bereich von 2 bis 60 Gew.-%, bezogen auf das Gesamtgewicht der lichtstreuenden Polymethylmethacrylat-Schicht, wobei die sphärischen Kunststoffpartikel bei 589 nm und 20°C einen Brechungsindexunterschied zur Polymethylmethacrylat-Matrix im Bereich von 0,02 bis 0,2 aufweisen, wobei die Konzentration der sphärischen Kunststoffpartikel c_{P} in Gew.-% , die Dicke der lichtstreuenden Polymethylmethacrylat Schicht d_{S} in mm sowie die Teilchengröße der sphärischen Kunststoffpartikel D_{P} in µm so gewählt ist, dass das Verhältnis c_{P}*d_{S}/D_{P}³ im Bereich von 0,0015 bis 0,015 Gew.-%*mm/µm³ und das Verhältnis von mittlerer Oberflächenrauhigkeit gemäß DIN 4768 der Polymethylmethacrylat-Srhicht Rₐ zu Teilchengröße der sphärischen Kunststoffpartikel D_{P} im Bereich von 0,05 bis 0,4 liegt.

2. Rückprojektionsschirm gemäß Anspruch 1, **dadurch gekennzeichnet, dass** das Verhältnis der Konzentration der sphärischen Kunststoffpartikel c_{P} zur Dicke der lichtstreuenden Polymothylmethacrylat-Schirht d_{S} c_{P}/d_{S} größer oder gleich 2,5 Gew.-%/mm ist.

3. Rückprojektionsschirm gemäß Anspruch 1 oder 2, **dadurch gekennzeichnet, dass** die lichtstreuende Polymethylmethacrylat-Schicht einen Glanz R85 gemäß DIN 67530 kleiner oder gleich 60 aufweist.

4. Rückprojektionsschirm gemäß einem oder mehreren der vorhergehenden Ansprüche, **dadurch gekennzeichnet, dass** das Verhältnis c_{P}*d_{S}/D_{P}³ im Bereich von 0,0025 bis 0,009 Gew.-%*mm/µm³ liegt.

5. Rückprojektionsschirm gemäß einem oder mehreren der vorhergehenden Ansprüche, **dadurch gekennzeichnet, dass** das Verhältnis aus Dicke der lichtstreuenden Polymethylmethacrylat-Schicht d_{S} und Teilchengröße der sphärischen Kunststoffpartikel D_{P} im Bereich von 5 bis 1500 liegt.

6. Rückprojectionsschirm gemäß einem oder mehreren der vorhergehenden Ansprüche, **dadurch gekennzeichnet dass** die sphärischen Kunststoffpartikel vernetzes Polystyrol und/oder vernetzte Poly(meth)acrylate umfassen.

7. Rückprojektionsschirm gemäß einem oder mehreren der vorhergehenden Ansprüche, **dadurch gekennzeichnet, dass** die lichistreuende Polymethylrnethaerylat-Schleht eingefärbt ist.

8. Rückprojektionsschirm gemäß einem oder mehreren der vorhergehenden Ansprüche, **dadurch gekennzeichnet, dass** die Matrix der lichtstreuenden Polymethylmethacrylat-Schicht bei 589 nm und 20°C einen Brechungsindex Im Bereich von 1;46 bis 1,54 aufweist

9. Rückprojektionsschirm gemäß einem oder mehreren der vorhergehenden Ansprüche, **dadurch gekennzeichnet, dass** die mittlere Oberflächenrauhigkeit Ra gemäß DIN 4768 der Platte im Bereich von 0,4 bis 6 µm liegt.

10. Rückprojektionsschirm gemäß einem oder mehreren der vorhergehenden Ansprüche, **dadurch gekennzeichnet, dass** die sphärischen Kunststoffpartikel eine Größe im Bereich von 15 bis 35 µm aufweisen.

11. Rückprojektionsschirm gemäß einem oder mehreren der vorhergehenden Ansprüche, **dadurch gekennzeichnet, dass** mindestens 60% der sphärischen Kunststoffpartikel einen Durchmesser von mindestens 15 µm und höchstens 30% der Streuperlen einen Durchmesser von mehr als 22µm aufweisen.

12. Rückprojektionsschirm gemäß einem oder mehreren der vorhergehenden Ansprüche, **dadurch gekennzeichnet, dass** der Schirm eine coextrudierte Folie oder Platte ist, die zusätzlich zur streuperlenhaltigen Schicht eine Trägerschicht aus Polymethylmethacrylat-Kunststoff aufweist, der keine lichtstreuenden Kunststoffpartikel umfasst, und die coextrudierte Folie oder Platte einen Gangunterschied aufgrund der optischen Doppelbrechung von höchstens 25 nm aufweist.

13. Rückprojektionsschirm gemäß einem oder mehreren der vorhergehenden Ansprüche, **dadurch gekennzeichnet, dass** der Schirm eine Transmission gemäß DIN 5036 größer oder gleich 25% aufweist.

14. Rückprojektionsschirm gemäß einem oder mehreren der vorhergehenden Ansprüche, **dadurch gekennzeichnet, dass** der Schirm einen Gelbwert gemäß DIN 6167 kleiner oder gleich 12 aufweist.

15. Rückprojektionsschirm gemäß einem oder mehreren der vorhergehenden Ansprüche, **dadurch gekennzeichnet, dass** der Schirm einen Intensitätshalbwertswinkel gemäß DIN 5036 größer oder gleich 15° aufweist.

16. Rückprojektionsschirm gemäß einem oder mehreren der vorhergehenden Ansprüche, **dadurch gekennzeichnet, dass** der Schirm ein Streuvermögen gemäß DIN 5036 größer oder gleich 0,15 aufweist.

17. Verfahren zur Herstellung eines Rückprojektionsschirms gemäß einem oder mehreren der Ansprüche 1 bis 16, **dadurch gekennzeichnet, dass** der Polymethylmethacrylat-Kunststoff zur einer Platte oder Folie extrudiert und die extrudierte Platte oder Folie anschließend für 5 Minuten bis 24 Stunden auf 110 bis 190°C erhitzt wird.

18. Verfahren gemäß Anspruch 17, **dadurch gekennzeichnet, dass** zur schonenden Einarbeitung der sphärischen Partikel in die Formmasse einen Doppelschneckenextruder mit Sidefeedereinrichtung verwendet wird.

19. Verwendung von sphärischen Partikeln mit einer Teilchengröße im Bereich von 5 bis 35 µm zur Herstellung von Rückprojektionsschirmen gemäß den Ansprüchen 1 bis 16.

20. Verwendung eines Rückprojektionsschirms gemäß einem oder mehreren der Ansprüche 1 bis 16 für die 3D-Projektion.

## Claims

1. Rear-projection screen in the form of a sheet or film, encompassing at least one light-scattering layer composed of extruded polymethyl methacrylate with a path difference due to optical birefringence of at most 25 nm, of thickness in the range from 0.05 to 4 mm, comprising spherical particles whose size is in the range from 5 to 35 µm, at a concentration in the range from 2 to 60% by weight, based on the total weight of the light-scattering polymethyl methacrylate layer, where the difference at 589 nm and 20°C between the refractive index of the spherical plastics particles and that of the polymethyl methacrylate matrix is in the range from 0.02 to 0.2, where the concentration of the spherical plastics particles C_{P} in % by weight, the thickness of the light-scattering polymethyl methacrylate layer d_{S} in mm and the size of the spherical plastics particles D_{P} in µm is selected in such a way that the ratio c_{P}*d_{S}/D_{P}³ is in the range from 0.0015 to 0.015% by weight*mm/µm³, and the ratio of the average surface roughness to DIN 4768 of the polymethyl methacrylate layer Rₐ to the size of the spherical plastics particles D_{P} is in the range from 0.05 to 0.4.

2. Rear-projection screen according to Claim 1, **characterized in that** the ratio of the concentration of the spherical plastics particles C_{P} to the thickness of the light-scattering polymethyl methacrylate layer d_{S} c_{P}/d_{S} is greater than or equal to 2.5% by weight/mm.

3. Rear-projection screen according to Claim 1 or 2, **characterized in that** the gloss R85° of the light-scattering polymethyl methacrylate layer to DIN 67530 is smaller than or equal to 60.

4. Rear-projection screen according to one or more of the preceding claims, **characterized in that** the ratio c_{P}*d_{S}/D_{P}³ is in the range from 0.0025 to 0.009% by weight*mm/µm³.

5. Rear-projection screen according to one or more of the preceding claims, **characterized in that** the ratio calculated from thickness of the light-scattering polymethyl methacrylate layer d_{S} and size of the spherical plastics particles d_{P} is in the range from 5 to 1500.

6. Rear-projection screen according to one or more of the preceding claims, **characterized in that** the spherical plastics particles encompass crosslinked polystyrene and/or crosslinked poly(meth)-acrylates.

7. Rear-projection screen according to one or more of the preceding claims, **characterized in that** the light-scattering polymethyl methacrylate layer has been coloured.

8. Rear-projection screen according to one or more of the preceding claims, **characterized in that** the matrix of the light-scattering polymethyl methacrylate layer has a refractive index in the range from 1.46 to 1.54 at 589 nm and 20°C.

9. Rear-projection screen according to one or more of the preceding claims, **characterized in that** the average surface roughness Rₐ of the sheet to DIN 4768 is in the range from 0.4 to 6 µm.

10. Rear-projection screen according to one or more of the preceding claims, **characterized in that** the size of the spherical plastics particles is in the range from 15 to 35 µm.

11. Rear-projection screen according to one or more of the preceding claims, **characterized in that** at least 60% of the spherical plastics particles have a diameter of at least 15 µm, and at most 30% of the scattering beads have a diameter of more than 22 µm.

12. Rear-projection screen according to one or more of the preceding claims, **characterized in that** the screen is a coextruded film or sheet which has, in addition to the layer comprising scattering beads, a backing layer composed of polymethyl methacrylate which encompasses no light-scattering plastics particles, and the coextruded film or sheet has a path difference due to optical birefringence of at most 25 nm.

13. Rear-projection screen according to one or more of the preceding claims, **characterized in that** the transmittance of the screen to DIN 5036 is greater than or equal to 25%.

14. Rear-projection screen according to one or more of the preceding claims, **characterized in that** the yellowness index of the screen to DIN 6167 is smaller than or equal to 12.

15. Rear-projection screen according to one or more of the preceding claims, **characterized in that** the halved-intensity angle of the screen to DIN 5036 is greater than or equal to 15°.

16. Rear-projection screen according to one or more of the preceding claims, **characterized in that** the scattering power of the screen to DIN 5036 is greater than or equal to 0.15.

17. Process for producing a rear-projection screen according to one or more of Claims 1 to 16, **characterized in that** the polymethyl methacrylate is extruded to give a sheet or film and the extruded sheet or film is then heated to 110-190°C for from 5 minutes to 24 hours.

18. Process according to Claim 17, **characterized in that** use is made of a twin-screw extruder with side-feeder equipment for non-aggressive incorporation of the spherical particles into the moulding composition.

19. Use of spherical particles with a particle size in the range from 5 to 35 µm for producing rear-projection screens according to Claims 1 to 16.

20. Use of a rear-projection screen according to one or more of Claims 1 to 16 for 3D projection.

## Revendications

1. Ecran de rétroprojection en forme d'une plaque ou feuille, comprenant au moins une couche qui diffuse la lumière, composée d'une matière plastique de polyméthacrylate de méthyle extrudée avec une différence de chemin en raison d'une biréfringence optique d'au plus 25 nm, d'une épaisseur dans la plage de 0,05 à 4 mm, comprenant des particules sphériques avec une taille de particule dans la plage de 5 à 35 µm, à une concentration dans la plage de 2 à 60 % en poids, sur la base du poids total de la couche de polyméthacrylate de méthyle qui diffuse la lumière, les particules de matières plastiques sphériques ayant un indice de réfraction à 589 nm et 20 °C différent de celui de la matrice de polyméthacrylate de méthyle d'une valeur dans la plage de 0,02 à 0,2, la concentration des particules de matières plastiques sphériques C_{P} en % en poids, l'épaisseur de la couche de polyméthacrylate de méthyle qui diffuse la lumière d_{S} en mm et la taille de particule des particules de matières plastiques sphériques D_{P} en µm étant choisies d'une manière telle que le rapport c_{P}*d_{S}/D_{P}³ est dans la plage de 0,0015 à 0,015 % en poids*mm/µm³ et que le rapport de la rugosité en surface moyenne conformément à DIN 4768 de la couche de polyméthacrylate de méthyle Rₐ à la taille de particule des particules de matières plastiques sphériques D_{P} est dans la plage de 0,05 à 0,4.

2. Ecran de rétroprojection selon la revendication 1, **caractérisé en ce que** le rapport de la concentration des particules de matières plastiques sphériques C_{P} à l'épaisseur de la couche de polyméthacrylate de méthyle qui diffuse la lumière d_{S} c_{P}/d_{S} est supérieur ou égal à 2,5 % en poids/mm.

3. Ecran de rétroprojection selon la revendication 1 ou 2, **caractérisé en ce que** le brillant R85° de la couche de polyméthacrylate de méthyle qui diffuse la lumière selon DIN 67530 est inférieur ou égal à 60.

4. Ecran de rétroprojection selon une ou plusieurs des revendications précédentes, **caractérisé en ce que** le rapport c_{P}*d_{S}/D_{P}³ est dans la plage de 0,0025 à 0,009 % en poids*mm/µm³.

5. Ecran de rétroprojection selon une ou plusieurs des revendications précédentes, **caractérisé en ce que** le rapport obtenu à partir de l'épaisseur de la couche de polyméthacrylate de méthyle qui diffuse la lumière d_{S} et de la taille de particule des particules de matières plastiques sphériques D_{P} est dans la plage de 5 à 1 500.

6. Ecran de rétroprojection selon une ou plusieurs des revendications précédentes, **caractérisé en ce que** les particules de matières plastiques sphériques englobent du polystyrène réticulé et/ou des poly(méth)acrylates réticulés.

7. Ecran de rétroprojection selon une ou plusieurs des revendications précédentes, **caractérisé en ce que** la couche de polyméthacrylate de méthyle qui diffuse la lumière est colorée.

8. Ecran de rétroprojection selon une ou plusieurs des revendications précédentes, **caractérisé en ce que** la matrice de la couche de polyméthacrylate de méthyle qui diffuse la lumière présente un indice de réfraction à 589 nm et 20 °C dans la plage de 1,46 à 1,54.

9. Ecran de rétroprojection selon une ou plusieurs des revendications précédentes, **caractérisé en ce que** la rugosité de surface moyenne Rₐ de la feuille selon DIN 4768 est dans la plage de 0,4 à 6 µm.

10. Ecran de rétroprojection selon une ou plusieurs des revendications précédentes, **caractérisé en ce que** les particules de matières plastiques sphériques présentent une taille dans la plage de 15 à 35 µm.

11. Ecran de rétroprojection selon une ou plusieurs des revendications précédentes, **caractérisé en ce qu'**au moins 60 % des particules de matières plastiques sphériques présentent un diamètre d'au moins 15 µm et au plus 30 % des perles de diffusion présentent un diamètre de plus de 22 µm.

12. Ecran de rétroprojection selon une ou plusieurs des revendications précédentes, **caractérisé en ce que** l'écran est une feuille ou une plaque co-extrudée, qui présente, en plus de la couche contenant des perles de diffusion, une couche de support composée d'une matière plastique de polyméthacrylate de méthyle qui ne comprend pas de particules de matière plastique qui diffusent la lumière, et la feuille ou la plaque co-extrudée présente une différence de chemin en raison de la biréfringence optique d'au plus 25 nm.

13. Ecran de rétroprojection selon une ou plusieurs des revendications précédentes, **caractérisé en ce que** l'écran présente un coefficient de transmission selon DIN 5036 supérieur ou égal 25 %.

14. Ecran de rétroprojection selon une ou plusieurs des revendications précédentes, **caractérisé en ce que** l'écran présente un indice de jaunissement selon DIN 6167 inférieur ou égal 12.

15. Ecran de rétroprojection selon une ou plusieurs des revendications précédentes, **caractérisé en ce que** l'écran présente un angle à demi-intensité selon DIN 5036 supérieur ou égal à 15°.

16. Ecran de rétroprojection selon une ou plusieurs des revendications précédentes, **caractérisé en ce que** l'écran a un pouvoir de diffusion selon DIN 5036 supérieur ou égal à 0,15.

17. Procédé pour la production d'un écran de rétroprojection selon une ou plusieurs des revendications 1 à 16, **caractérisé en ce que** la matière plastique de polyméthacrylate de méthyle est extrudée pour donner lieu à une plaque ou une feuille, et la plaque ou la feuille extrudée est ensuite chauffée à 100-190°C pendant de 5 minutes à 24 heures.

18. Procédé selon la revendication 17, **caractérisé en ce qu'**une extrudeuse à double vis avec un équipement d'alimentation latérale est utilisé pour l'incorporation non agressive des particules sphériques.

19. Utilisation de particules sphériques ayant une taille de particule dans la plage de 5 à 35 µm pour produire des écrans de rétroprojection selon les revendications 1 à 16.

20. Utilisation d'un écran de rétroprojection selon une ou plusieurs des revendications 1 à 16 pour la projection en 3D.
